# EUROPÄISCHE PATENTSCHRIFT

(11) **EP 3 999 407 B1**
(45) Veröffentlichungstag und Bekanntmachung des Hinweises auf die Patenterteilung: **24.04.2024**
(21) Anmeldenummer: 21734100.7
(22) Anmeldetag: 16.06.2021
(51) Int. Cl.: B62J 1/16, B62K 27/00, B60N 2/26

(54) **BABY-TRANSPORTVORRICHTUNG IN EINEM FAHRRADANHÄNGER**
BABY TRANSPORT DEVICE IN A BICYCLE TRAILER
DISPOSITIF DE TRANSPORT DE BÉBÉ DANS UNE REMORQUE DE BICYCLETTE

(30) Priorität: 08.07.2020 DE 102020118031
(43) Veröffentlichungstag der Anmeldung: 25.05.2022
(73) Patentinhaber: Boldt, Julia, 53773 Hennef (DE)
(72) Erfinder: BOLDT, Nikolai, 53567 Buchholz (DE)
(74) Vertreter: Freischem & Partner Patentanwälte mbB
(86) Internationale Anmeldenummer: PCT/EP2021/066232
(87) Internationale Veröffentlichungsnummer: WO 2022/008185

(56) Entgegenhaltungen:
- EP-A2- 1 398 262
- WO-A1-2014/154903
- DE-U1- 20 003 769
- DE-U1-202011 102 683
- DE-U1-202019 003 584
- US-A1- 2020 010 105
- Weber ET AL: "Einbauanleitung für die WEBER Babyschale", , 1. Mai 2008 (2008-05-01), XP055831901, www.burley.de Gefunden im Internet: URL:https://fahrrad-anhaenger.de/media/pdf /22/14/58/weber_babyschale_montageanleitun g.pdf [gefunden am 2021-08-12]

## Beschreibung

Die Erfindung betrifft eine Baby-Transportvorrichtung zum hängenden Transport eines Babys in einem Fahrradanhänger sowie die Anordnung einer solchen Baby-Transportvorrichtung in einem Fahrradanhänger. Es wird insoweit auch auf Fahrradanhänger mit einer solchen Baby-Transportvorrichtung verwiesen.

Aus WO 2014/154903 A1 ist eine Vorrichtung bekannt, die variabel zwischen einer Konfiguration als Kinderwagen (stroller) und als Fahrradanhänger umwandelbar sein soll. Der Sitz dieser Vorrichtung ist fest am Gestell befestigt. In dem Dokument ist nichts dazu offenbart, dass die Vorrichtung zum hängenden Transport von Babys geeignet sein soll.

Aus EP 1 398 262 A2 ist eine Körperaufnahme für ein fahrbares Rahmengestell bekannt. Dabei handelt es sich um eine flexible Matte, die gemäß dem Anspruch 1 zum hängenden Transport von Babys oder Kleinkindern mittels Spannelementen in eine Transportform gebracht werden kann. Diese Körperaufnahme weist keine eigene Formstabilität auf. Die Form wird erst mit den Spannelementen hergestellt.

In DE 20 2019 003 584 U1 ist die Gestaltung eines Fahrradanhängers offenbart, insbesondere eines einfachen Transportanhängers mit zwei Bügeln, die dazu dienen sollen, eine Kindersitzbasis fest mit dem Rahmen des Fahrradanhängers zu verbinden. Der Kindersitz selbst, welcher auf dieser Kindersitzbasis befestigt werden soll, ist nicht im Detail beschrieben. In dem Dokument wird nicht auf eine Anordnung für den hängenden Transport eines Babys eingegangen.

Aus DE 20 2011 102 683 U1 ist ein Fahrradanhänger mit einer Autokindersitz-Befestigung bekannt. Die Befestigung erfolgt durch an der Rahmenkonstruktion des Fahrradanhängers vorgesehene Mittel, insbesondere durch den Einbau eines fest mit einem ebenen Tragrahmen und einem Überrollbügel verbundenen Autokindersitzes. Es wird nicht Bezug auf einen hängenden Transport eines Babys in einem Fahrradanhänger verwiesen.

Aus der gattungsgemäßen DE 200 03 769 U1 ist eine Vorrichtung zum Anpassen der Auflagefläche und zur Fixierung von Säuglingen und Kleinkindern auf der Auflagefläche beim Transport in Fahrradanhängern und geschobenen Fahrzeugen bekannt, die aus selbsttragendem Dämpfungsmaterial besteht, das einen stumpfen Sitzwinkel bildet. Diese Baby-Transportvorrichtung wird bei Verwendung in einem Fahrradanhänger auf einem Sitzabschnitt positioniert und dort fixiert. Nachteilig an dieser Baby-Transportvorrichtung ist, dass eine hängende Lagerung nicht vorgesehen ist, wodurch Fahrbahnunebenheiten und sonstige Stoßeinwirkungen auf den Fahrradanhänger einwirkende Kräfte unmittelbar von dem Sitzabschnitt auf die Baby-Transportvorrichtung übertragen werden. Ebenfalls nachteilig ist, dass ein zu transportierendes Baby oberseitig auf der aus dem Dämpfungsmaterial gebildeten Vorrichtung aufliegt und dementsprechend gegenüber seitlich einwirkenden Kräften (d.h. bei einem Seitenaufprall) ungeschützt ist. Auf eine solche Vorrichtung wird auch in dem Dokument Weber ET AL: "Einbauanleitung für die WEBER Babyschale",, 1. Mai 2008 (2008-05-01), XP055831901, www.burley.de Gefunden im Internet:URL:https://fahrrad-anhaenger.de/ media/pdf/22/14/58/weber_babyschale_montageanleitung.pdf verwiesen.

Aus US 2020/0010105 A1 ist ein faltbares Gestell für einen Kinderwagen bekannt, wobei in diesem Zusammenhang auch eine Babyschale und ein Buggyaufsatz dargestellt sind. Eine Anwendung der Babyschale oder des Buggyaufsatzes als Baby-Transportvorrichtung in Fahrradanhängern ist nicht offenbart.

Aus DE 20 2012 101 092 U1 und aus DE 10 2017 116 064 A1 sind Baby-Transportvorrichtungen mit einem Rahmen und einem an dem Rahmen befestigten Textilerzeugnis, das als Baby-Transportbereich dient. Diese Baby-Transportvorrichtungen sind zwar für eine hängende Lagerung eines zu transportierenden Babys geeignet, haben aber den Nachteil, dass das Baby rückseitig nur von dem Textilerzeugnis gehalten ist. Dadurch bieten diese Baby-Transportvorrichtungen keinen Schutz vor der Einwirkung von Gegenständen und Stößen auf ein zu transportierendes Baby von der Rückseite her und von unten.

Überhaupt keinen Schutz vor der Einwirkung von Gegenständen und Stößen auf ein zu transportierendes Baby von der Rückseite her und von unten weisen die aus DE 102 42 198 C5 und aus EP 2 075 185 B1 als Körperaufnahme bezeichneten Baby-Transportvorrichtungen auf, die ebenfalls eine hängende Lagerung eines zu transportierenden Babys ermöglichen. Diese Baby-Transportvorrichtungen weisen den weiteren Nachteil auf, dass ein Schutz vor der Einwirkung von Gegenständen und Stößen von keiner Seite her gegeben ist. Bei diesen Transportvorrichtungen ist ein zu transportierendes Baby insoweit durch die Baby-Transportvorrichtung selbst praktisch ungeschützt.

Aus DE 20 2017 003 806 U1 ist eine weitere solche Körperaufnahme bekannt, die als Liegesitz für Fahrradanhänger bezeichnet und aus einer flexiblen Stützmatte gebildet ist. An der Stützmatte sind Spannmittel angeordnet, mit welchen die Stützmatte in eine Liegeposition verspannt werden kann. In dem Dokument wird auch auf über die Länge der Stützmatte verteilte, an ihrer Rückseite angeordnete elastische Stäbe zur Stabilisierung verwiesen. Diese Stäbe sind aufgrund ihrer Elastizität und ihrer Anordnung nicht geeignet, ein zu transportierendes Baby oder Kleinkind von der Seite oder von der Rückseite her vor der Einwirkung von Gegenständen und Stößen zu schützen.

Der Erfindung liegt die Aufgabe zugrunde, eine Baby-Transportvorrichtung zur Verfügung zu stellen, die einen komfortablen Transport eines Babys ermöglicht und zugleich das zu transportierende Baby möglichst wirksam vor der Einwirkung von Gegenständen und Stößen schützt.

Die Lösung der Aufgabe erfolgt erfindungsgemäß mit den Merkmalen des unabhängigen Anspruchs.

Weitere vorteilhafte Ausführungsformen sind in Verbindung mit den abhängigen Ansprüchen beschrieben.

Eine erfindungsgemäße Baby-Transportvorrichtung zum hängenden Transport eines Babys in einem Fahrradanhänger weist mindestens einen flächig ausgebildeten Baby-Transportbereich für die zumindest teilweise Aufnahme eines zu transportierenden Babys auf. Dabei ist der flächig ausgebildete Baby-Transportbereich aus einer formstabilen Struktur gebildet, wobei die formstabile Struktur seitliche Wände aufweist, um ein zu transportierendes Baby mit den seitlichen Wänden vor Intrusionskräften zu schützen, die bei einem Seitenaufprall oder einem Überschlagen eines Fahrradanhängers durch den Aufprall von Gegenständen auftreten können, und es sind ferner Mittel zur hängenden Befestigung des Baby-Transportbereichs in dem Fahrradanhänger vorgesehen. Die seitlichen Wände weisen im Kopfbereich eine vergrößerte Höhe auf. Ferner sind an dem Baby-Transportbereich selbst Mittel zur hängenden Befestigung angeordnet. Bei diesen Mitteln handelt es sich um Spannelemente, wobei diesbezüglich insbesondere auf Spanngurte verwiesen wird. Als besonders geeignet erwiesen haben sich Spannelemente mit daran bereits befestigten hakenartig ausgebildeten Befestigungselementen. Derartige Spannelemente mit daran befestigten hakenartig ausgebildeten Befestigungselementen haben den Vorteil, dass die Baby-Transportvorrichtung zunächst mit den hakenartig ausgebildeten Befestigungselementen an Rahmenelementen eines Fahrradanhängers befestigt werden kann, bevor durch Spannen der Spannelemente eine hängende Lagerung bewirkt wird. Dadurch ergibt sich eine einfache Montage der Baby-Transportvorrichtung in Fahrradanhängern.

Mit einem flächig ausgebildeten Baby-Transportbereich für die zumindest teilweise Aufnahme eines zu transportierenden Babys ist gemeint, dass beispielsweise eine Fläche zur Aufnahme eines bestimmten Körperbereichs aus einer formstabilen Struktur gebildet ist, um diesen Körperbereich vor der Einwirkung von Gegenständen und Stößen zu schützen. Beispielsweise kann der Baby-Transportbereich in einer oberen Hälfte aus einer formstabilen Struktur gebildet sein, um den Kopf und den Oberkörper eines zu transportierenden Babys rückseitig und/oder von unten vor Krafteinwirkung zu schützen. Zu einer derartigen Krafteinwirkung kann es insbesondere dann kommen, wenn bei einer Notbremsung oder einem Unfall hohe negative Beschleunigungskräfte wirken und Gegenstände, die in einem Bereich hinter der Baby-Transportvorrichtung in dem Fahrradanhänger gelagert und nicht oder nicht ausreichend in dem Fahrrad fixiert sind, sich in Richtung der Baby-Transportvorrichtung in Bewegung setzen. Bei einem Aufprall derartiger Gegenstände gegen die formstabile Struktur werden diese abgelenkt oder von der formstabilen Struktur aufgefangen, so dass der Rücken eines in dem Baby-Transportbereich angeordneten Babys vor harten Schlägen oder sonstigen Krafteinwirkungen geschützt ist.

Unter einer formstabilen Struktur werden insbesondere Flächenstrukturen, Gewebe, Gewirke oder sonstige Strukturen verstanden, die eine ausreichende Eigensteifigkeit aufweisen, um die vorstehend beschriebene Wirkung entfalten zu können, insbesondere indem aufprallende Gegenstände abgelenkt oder die Aufprallenergie derartiger Gegenstände beim Aufprall gegen die formstabile Struktur signifikant reduziert wird, so dass eine Krafteinwirkung auf ein in der formstabilen Struktur gelagertes Babys vollständig absorbiert oder zumindest größtenteils absorbiert werden. Vorzugsweise ist die Eigensteifigkeit ausreichend groß, um die Form eines Grundkörpers der Baby-Transportvorrichtung, insbesondere eines aus Kunststoff hergestellten Grundkörpers, auch dann (im Wesentlichen) erhalten bleibt, wenn der Grundkörper mittels als Spannelementen ausgelegten Gurten hängend in einem Fahrradanhänger fixiert wird. Eine solche Fixierung erfolgt vorzugsweise, indem insbesondere von einem vorderen Abschnitt der Baby-Transportvorrichtung nach vorne und von einem hinteren Abschnitt der Baby-Transportvorrichtung nach hinten jeweils mindestens ein Spannelement eingesetzt wird. Bevorzugt sind jeweils mindestens zwei Spannelemente vorgesehen, mittels welchen die Baby-Transportvorrichtung nach vorne und nach hinten in einer hängenden Lage in dem Fahrradanhänger verspannbar ist.

Die Ausbildung seitlicher Wände hat den Vorteil, dass ein in dem Baby-Transportbereich angeordnetes Baby seitlich gestützt wird, insbesondere bei auf das Baby einwirkenden Querkräften, wie sie beispielsweise bei einer Kurvenfahrt auftreten. Ferner kann ein zu transportierendes Baby mit seitlichen Wänden auch vor Intrusionskräften geschützt werden, die bei einem Seitenaufprall oder einem Überschlagen eines Fahrradanhängers durch den Aufprall von Gegenständen auftreten können. Dann wirken entsprechend biegesteif ausgeführte seitliche Wände als Seiten-Aufprallschutz-Elemente.

Der Kopf eines in der Baby-Transportvorrichtung zu transportierenden Babys kann besonders geschützt werden, weil die seitlichen Wände im Kopfbereich eine vergrößerte Höhe aufweisen.

In einer praktischen Ausführungsform einer erfindungsgemäßen Baby-Transportvorrichtung erstreckt sich die formstabile Struktur über den vollständigen Baby-Transportbereich. Mit dem Baby-Transportbereich ist in diesem Zusammenhang eine Ausdehnung in Längsrichtung und in Querrichtung gemeint, welche sich über die vollständige Länge und die vollständige Breite eines zu transportierenden Babys erstreckt, so dass jedes für die Baby-Transportvorrichtung geeignete zu transportierende Baby vollständig rückseitig und von unten von dem Baby-Transportbereich überdeckt ist, wenn es sich in einer Soll-Lage in dem Baby-Transportbereich befindet.

In einer weiteren praktischen Ausführungsform, die besonders einfach und kostengünstig herstellbar ist, ist die formstabile Struktur einstückig ausgebildet und/oder aus Kunststoff hergestellt. In diesem Zusammenhang wird insbesondere darauf verwiesen, dass eine einstückige Herstellung auch einen besonders wirksamen rückseitigen Schutz des zu transportierenden Babys und einen Schutz von unten bietet, da Verbindungsstellen zwischen einzelnen Elementen, welche üblicherweise Schwachstellen bilden und den Fertigungsaufwand erhöhen, nicht vorhanden sind. Die Herstellung einer Baby-Transportvorrichtung aus Kunststoff kann, insbesondere wenn große Stückzahlen hergestellt werden, relativ kostengünstig in einer Massenfertigung erfolgen, insbesondere im Kunststoff-Spritzgießverfahren.

Bei einer einstückigen Herstellung einer erfindungsgemäßen Baby-Transportvorrichtung aus Kunststoff bzw. zumindest eines Grundkörpers der Baby-Transportvorrichtung, eignet es sich insbesondere, die formstabile Struktur als eine Art Wanne auszubilden, welche zusätzlich zu einem flächigen Baby-Transportbereich auch eine oder mehrere seitliche, hintere und/oder vordere Wände aufweisen kann.

Das zu transportierende Baby ist sowohl rückseitig als auch von den Seiten her mittels der formstabilen Struktur vor der Einwirkung von Stößen und Kräften geschützt, wenn die formstabile Struktur mit dem Baby-Transportbereich durch einen Grundkörper mit seitlichen Wänden als Schale ausgebildet ist.

Die Steifigkeit der gesamten Baby-Transportvorrichtung kann weiter erhöht werden, wenn die formstabile Struktur einen umlaufenden, oberseitigen Kragen aufweist. Damit sind insbesondere Gestaltungen gemeint, welche einen Rand aufweisen, welcher sich sowohl über die Seiten als auch über die Vorderkante und Hinterkante der Baby-Transportvorrichtung erstrecken, wobei die Ränder - vorzugsweise nach außen - umgeschlagen sind und sich im Bereich des Kragens dadurch jeweils eine Doppelwand ausbildet. Dabei ist der Übergangsbereich zwischen dem außenseitigen Kragen und der jeweiligen seitlichen, vorderen und hinteren Wand vorzugsweise mit einem Radius versehen, so dass im Bereich des umlaufenden Kragens zumindest oberseitig keine scharfen Kanten ausgebildet sind.

In Verbindung mit einem sich nach außen erstreckenden Kragen wird auf den weiteren Vorteil verwiesen, dass der Kragen jeweils einen außenseitigen Anschlagbereich der Baby-Transportvorrichtung bildet, so dass im Fall eines Kontakts zu anderen Gegenständen oder Elementen des Fahrradanhängers zunächst noch eine Federwirkung durch den Kragen erzielt werden kann, welche sich dadurch ergibt, dass der Kragen sich federelastisch in Richtung des Baby-Transportbereichs bewegen kann. Dazu ist vorzugsweise zwischen dem Kragen und dem Baby-Transportbereich ein Freiraum vorgesehen, welcher zum federelastischen Einfedern im Falle des Auftretens von seitlichen, vorderseitigen oder rückseitigen Kräften auf die Baby-Transportvorrichtung genutzt werden kann.

Im Zusammenhang mit seitlichen Wänden, die im Kopfbereich eine vergrößerte Höhe aufweisen, wird insbesondere auf eine vorteilhafte praktische Ausführungsform verwiesen, bei welcher die Wände im Kopfbereich eine Höhe und eine Längserstreckung aufweisen, die mindestens 50 Prozent Überdeckung mit dem Kopf eines in Soll-Lage in der Baby-Transportvorrichtung angeordneten Babys aufweisen.

Das Gewicht einer erfindungsgemäßen Baby-Transportvorrichtung kann besonders gering gehalten werden, wenn die formstabile Struktur über den vollständigen Baby-Transportbereich mit einer möglichst geringen Wandstärke hergestellt ist. Um dennoch eine hängende Befestigung der Baby-Transportvorrichtung in einem Fahrradanhänger realisieren zu können, ist es bevorzugt, wenn an dem Baby-Transportbereich verstärkte Befestigungsbereiche zur Anwendung von Spannelementen vorgesehen sind. Dadurch wird die Baby-Transportvorrichtung funktions- und gewichtsoptimiert, was auch in Bezug auf das Schwingungsverhalten der Baby-Transportvorrichtung im Betrieb eines Fahrradanhängers vorteilhaft ist.

In Verbindung mit der Verwendung von Spannelementen zur hängenden Befestigung der Baby-Transportvorrichtungen an einem Fahrradanhänger hat es sich als vorteilhaft erwiesen, wenn in mindestens einem Befestigungsbereich, vorzugsweise in allen Befestigungsbereichen, mindestens zwei Öffnungen zur zweifachen und/oder umschlingenden Anordnung von Spannelementen vorgesehen sind. Diesbezüglich wird insbesondere darauf verwiesen, dass die zwei Öffnungen für zwei separate Spannelemente verwendet werden können, um jedes Spannelement durch ein Ersatz-Spannelement redundant zu gestalten. Alternativ kann ein Spannelement auch durch eine Öffnung zur Innenseite des Baby-Transportbereichs geführt und durch die andere Öffnung wieder nach außen geführt werden, um die von dem Spannelement auf den Baby-Transportbereich wirkenden Kräfte über zwei Öffnungen zu verteilen und damit die lokale Materialbelastung zu reduzieren.

Die Erfindung betrifft auch eine Anordnung einer Baby-Transportvorrichtung in einem Fahrradanhänger, wobei die Baby-Transportvorrichtung derart in dem Fahrradanhänger fixiert ist, dass der Baby-Transportbereich hängend gelagert ist. Auf die vorstehend bereits in Verbindung mit der Baby-Transportvorrichtung beschriebenen Vorteile wird hiermit noch einmal verwiesen. Die hängende Lagerung des Baby-Transportbereichs hat den Vorteil, dass auf den Fahrradanhänger einwirkende Stöße, welche abhängig von dem jeweiligen Federungskonzept des Fahrradanhängers mehr oder weniger stark auf in dem Fahrradanhänger installierte Sitzelemente übertragen werden, nicht unmittelbar auf die Baby-Transportvorrichtung übertragen werden. Die hängende Lagerung der Baby-Transportvorrichtung schafft eine komfortable Federung und führt dazu, dass ein in der Baby-Transportvorrichtung transportiertes Baby vor der Übertragung von Fahrbahnunebenheiten und Schlägen geschützt ist, da die Baby-Transportvorrichtung aufgrund der hängenden Lagerung zu einer schwingenden Dämpfung derartiger Schläge vorgesehen und ausgelegt ist.

Weitere praktische Ausführungsformen und Vorteile der Erfindung sind nachfolgend im Zusammenhang mit den Zeichnungen beschrieben. Es zeigen:
- Fig. 1: eine Ausführungsform einer erfindungsgemäßen Baby-Transportvorrichtung in einer isometrischen Darstellung von schräg oben,
- Fig. 2: die Baby-Transportvorrichtung aus Figur 1 in einer Ansicht von unten,
- Fig. 3: die Baby-Transportvorrichtung aus den Figuren 1 und 2 in einer Seitenansicht, wobei eine Seitenwand im Kopfbereich entfernt wurde, um die Überdeckung des Kopfes eines zu transportierenden Babys mit der Seitenwand darzustellen,
- Fig. 4: die Baby-Transportvorrichtung aus den Figuren 1 bis 3 in einer Explosionsdarstellung,
- Fig. 5: einen Fahrradanhänger mit einer darin befestigten Baby-Transportvorrichtung aus den Figuren 1 bis 4 in einer perspektivischen Ansicht von schräg vorne und
- Fig. 6: den Fahrradanhänger aus Fig. 5 mit der darin befestigten Baby-Transportvorrichtung aus den Figuren 1 bis 4 in einer Seitenansicht.

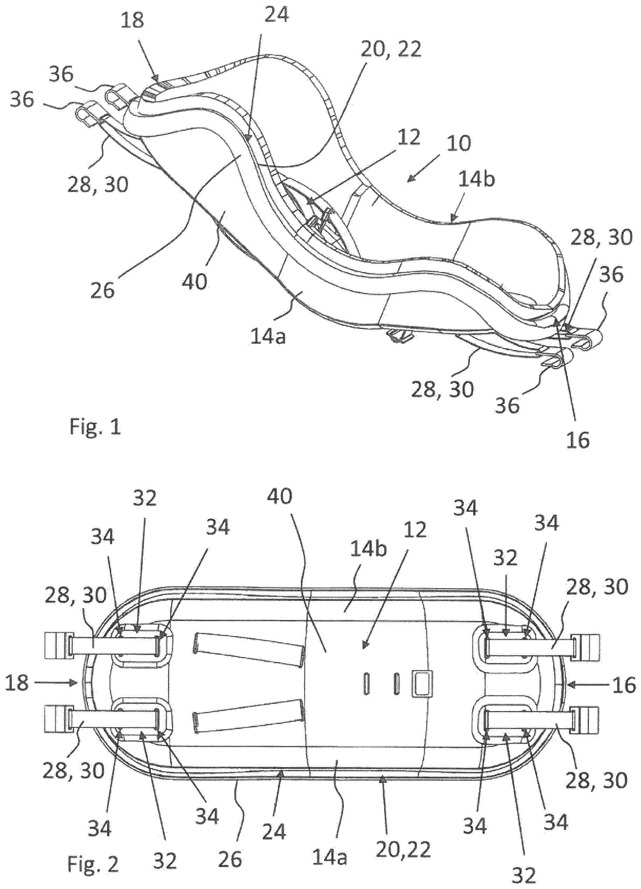

In den Figuren 1-3 ist ein Ausführungsbeispiel einer erfindungsgemäßen Baby-Transportvorrichtung 10 in verschiedenen Ansichten gezeigt. Die Baby-Transportvorrichtung 10 umfasst einen Grundkörper 40 mit einem flächig ausgebildeten Baby-Transportbereich 12, der als Liegefläche für ein zu transportierendes Baby (nicht gezeigt) vorgesehen ist. Rechts und links des Baby-Transportbereichs 12 weist die Baby-Transportvorrichtung 10 jeweils eine seitliche Wand 14a, 14b auf. Der Grundkörper 40 des Baby-Transportbereichs 12 und die seitlichen Wände 14a, 14b sind in der gezeigten Ausführungsform einstückig aus Kunststoff hergestellt und so ausgelegt, dass sich eine formstabile Struktur ergibt. Wie in Figur 1 gut zu erkennen ist, bilden der Grundkörper 40 mit dem Baby-Transportbereich und die seitlichen Wände, 14a, 14b eine Schale, welche das Baby sowohl rückseitig als auch von den Seiten her mittels der formstabilen Struktur vor der Einwirkung von Stößen und Kräften schützt.

Die seitlichen Wände 14a, 14b sowie ein unteres Ende 16 und ein oberes Ende 18 des Baby-Transportbereichs 12 weisen einen umlaufenden Rand 20 auf, der als Kragen 22 ausgebildet ist. Der Kragen 22 ist ein von der jeweiligen seitlichen Wand 14a, 14b bzw. dem unteren Ende 16 bzw. dem oberen Ende 18 des Baby-Transportbereichs 12 nach außen umgestülpter Bereich mit einem Radius 24 und einem Außenrand 26.

Die Ausbildung des Kragens 22 ist insoweit von Vorteil, als äußere, auf die Baby-Transportvorrichtung 10 einwirkende Kräfte zunächst von dem Außenrand 26 aufgenommen werden. Geringere Kräfte werden bereits dadurch absorbiert, dass sich der Außenrand 26 federelastisch in Richtung der Seitenwand 14a, 14b bzw. des unteren Endes, 16 oder oberen Endes 18 des Baby-Transportbereichs 12 zu bewegen kann. Größere Kräfte werden zumindest mit geringerem Kraftniveau in den Baby-Transportbereich 12 eingeleitet. Dabei ist der Baby-Transportbereich 12 jedoch i. V. m. den Seitenwänden 14a, 14b derart formstabil ausgelegt, dass eine direkte Krafteinwirkung auf ein in dem Baby-Transportbereich 12 angeordnetes Baby keine unmittelbare Krafteinwirkung erfährt. Die aus dem Baby-Transportbereich 12 und den Seitenwänden 14a, 14b gebildete Schale wirkt insoweit wie ein Schutzpanzer für zu transportierende Babys.

Die Befestigung der in den Figuren 1-3 dargestellten Baby-Transportvorrichtung 10 erfolgt mittels Spannelementen 28 in Form von Gurten 30. Wie in Figur 2 gut erkennbar ist, sind insgesamt vier Gurte 30 vorgesehen. Die Verbindung der Spannelemente 28 mit der Baby-Transportvorrichtung 10 erfolgt über Befestigungsbereiche 32, die alle in dem Baby-Transportbereich 12 ausgebildet sind. Die Befestigungsbereiche 32 sind gegenüber dem übrigen Baby-Transportbereich 12 verstärkt. Dies ist bei den in den Figuren 1-3 gezeigten Ausführungsformen dadurch realisiert, dass die Wanddicke des Kunststoffs in den Befestigungsbereichen 32 lokal vergrößert ist. In der gezeigten Ausführungsform ist in den Befestigungsbereichen 32 eine Materialstärke von 5 mm vorgesehen, wohingegen im übrigen Baby-Transportbereich 12 nur eine Wandstärke von 3 mm vorgesehen ist.

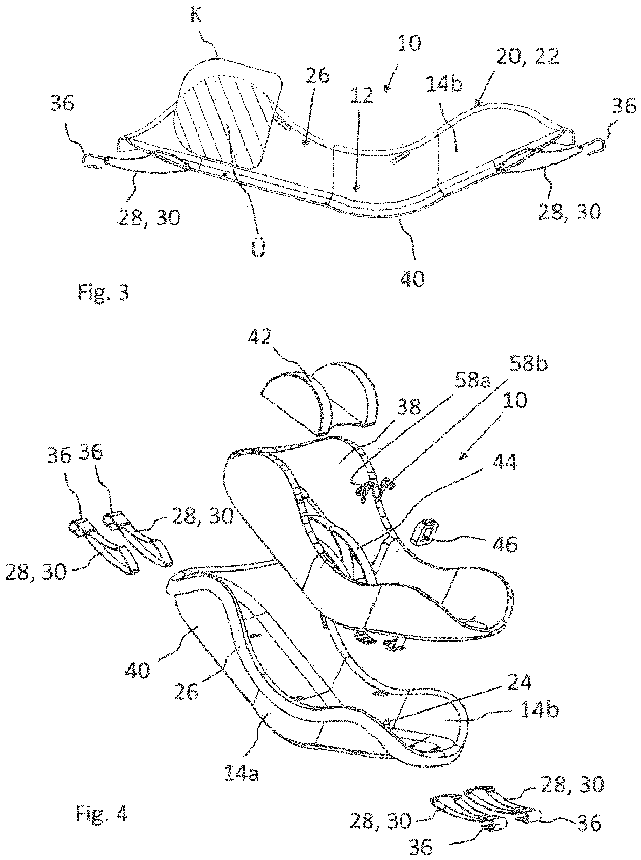

In den Befestigungsbereichen 32 sind jeweils zwei Öffnungen 34 vorgesehen. Wie in Figur 3 gut erkennbar ist, sind die Öffnungen 34 dazu genutzt, die Spanngurte 30 umschlingend durch die Öffnungen 34 in den Befestigungsbereichen 32 anzuordnen.

Wie in den Figuren 1 und 3 gut erkennbar ist, sind an den Spanngurten 30 endseitig hakenartig ausgebildete Befestigungselemente 36 vorgesehen. Diese Befestigungselemente 36 ermöglichen es, zur Montage einer erfindungsgemäßen Baby-Transportvorrichtung 10 in einem Fahrradanhänger (in den Figuren 1-3 nicht dargestellt) zunächst durch Einhängen vorzumontieren und dann durch Verkürzen der wirksamen Länge der Spannelemente 28 zu verspannen.

In Figur 3 ist exemplarisch die Fläche K dargestellt, welche der Kopf eines zu transportierenden Babys (nicht dargestellt) im Kopfbereich der erfindungsgemäßen Baby-Transportvorrichtung 10 einnimmt. Mit der schraffierten Fläche Ü ist der Bereich der Überdeckung mit den Seitenwänden 14a, 14b dargestellt. Wie aus Figur 3 ersichtlich ist, ist diese Überdeckung deutlich größer als 50 Prozent. Sie entspricht in dem gezeigten Beispiel in etwa 80-85 Prozent der Fläche des Kopfes K, wobei nur ein oberer Teilbereich des Kopfes K nicht von den Seitenwänden 14a, 14b überdeckt ist. Damit gewährt die erfindungsgemäße Baby-Transportvorrichtung 10 auch einen sehr guten Schutz vor der Einwirkung von seitlichen Kräften, insbesondere gegen den Kopf (nicht dargestellt) eines zu transportierenden Babys.

Um einen hohen Komfort für ein zu transportierendes Baby zu erzielen, ist bei einer besonders komfortablen Ausführungsform in dem Grundkörper 40 der Baby-Transportvorrichtung 10 ein optionaler Polster-Einsatz 38 angeordnet. In der gezeigten Ausführungsform ist der Polster-Einsatz 38 so gestaltet, dass er sich passgenau in den Grundkörper 40 einsetzen lässt. Zur Verbesserung der Seitenführung des Kopfes eines Babys ist ein optionales Kopfpolster 42 vorgesehen, das den Kopf eines zu transportierenden Babys seitlich umschließt. Im montierten Zustand ist der Polster-Einsatz 38 auf geeignete Weise fest mit dem Grundkörper 40 verbunden, so dass ein in dem Polster-Einsatz positioniertes und mittels vorgesehener Gurte 44, Einsteckelementen 58a, 58b und damit zusammenwirkender Gurtschnalle 46 fixiertes Baby (nicht gezeigt) sicher gegenüber dem Grundkörper 40 fixiert und für einen Transport mit einem Fahrradanhänger gelagert ist.

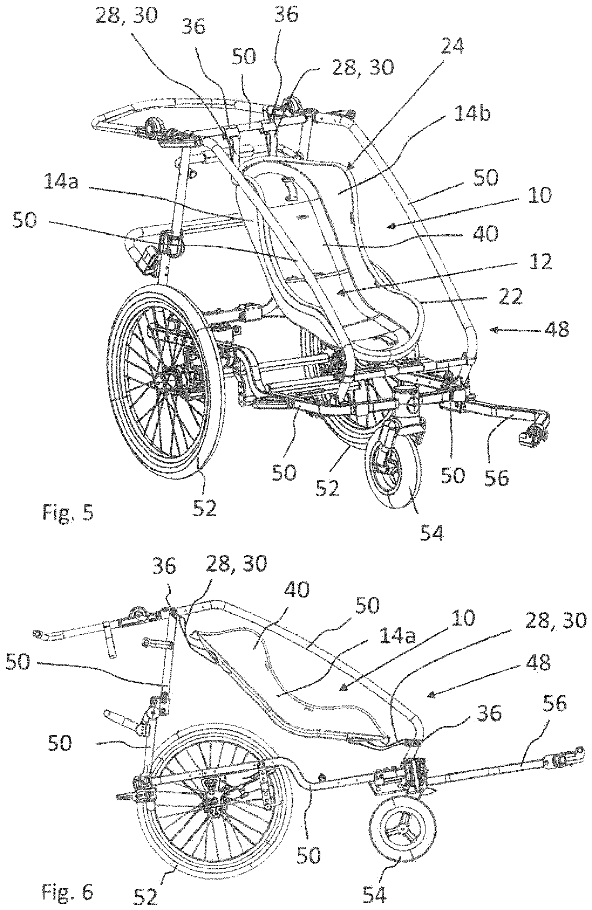

In den Figuren 5 und 6 ist eine Baby-Transportvorrichtung 10 gemäß den Figuren 1 bis 4 in einem vorinstallierten Zustand in einem Fahrradanhänger 48 gezeigt, wobei nur der Grundkörper 40 ohne den Polster-Einsatz 38 dargestellt ist, um die Befestigung in dem Fahrradanhänger 48 besser erkennen zu können.

Der Fahrradanhänger 48 weist einen aus mehreren Rahmenelementen 50 gebildeten Rahmen auf. Ein in den Figuren 5 und 6 nicht dargestellter Sitzbereich mit Sitzfläche und Rückenlehne ist ebenfalls vorgesehen. Hinten sind zwei Laufräder 52 vorgesehen. Vorne ist ein optionales Buggyrad dargestellt, das insbesondere dann zum Einsatz kommt, wenn der Fahrradanhänger 48 im Schiebebetrieb genutzt wird. Für den Anhängerbetrieb mit einem Fahrrad (nicht dargestellt) kommt eine, sich von der Vorderseite des Fahrradanhängers 48 nach vorne erstreckende Deichsel 56 zum Einsatz.

Zur Nutzung der Baby-Tragevorrichtung 10 werden die Befestigungselemente 36 in sich in Querrichtung erstreckende Rahmenelemente 50 des Fahrradanhängers 48 eingehängt. Anschließend werden die als Spannelemente 28 ausgeführten Gurte 30 gespannt, indem deren wirksame Länge so weit wie möglich verkürzt wird. Dadurch ergibt sich eine hängende Position der Baby-Transportvorrichtung 10, wie in den Figuren 5 und 6 gut zu erkennen. Die Baby-Transportvorrichtung ist vorzugsweise so gestaltet, dass diese in einem Fahrradanhänger ohne direkten Kontakt zwischen Grundkörper 40 und dem nicht dargestellten Sitzbereich hängend positionierbar ist. Dadurch kann ein hoher Federungskomfort für ein in der Baby-Transportvorrichtung 10 transportiertes Baby erzielt werden.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie wird nur durch die angehängten Ansprüche definiert.

### Bezugszeichenliste

- 10: Baby-Transportvorrichtung
- 12: Baby-Transportbereich
- 14a, 14b: Seitenwände
- 16: unteres Ende
- 18: oberes Ende
- 20: umlaufender Rand
- 22: Kragen
- 24: umgestülpter Bereich
- 26: Außenrand
- 28: Spannelemente
- 30: Gurte
- 32: Befestigungsbereiche
- 34: Öffnungen
- 36: Befestigungselemente
- 38: Polster-Einsatz
- 40: Grundkörper
- 42: Kopfpolster
- 44: Gurt
- 46: Gurtschnalle
- 48: Fahrradanhänger
- 50: Rahmenelement
- 52: Laufrad
- 54: Buggyrad
- 56: Deichsel
- 58a, 58b: Einsteckelement

## Patentansprüche

1. Baby-Transportvorrichtung (10) zum hängenden Transport eines Babys in einem Fahrradanhänger, wobei mindestens ein flächig ausgebildeter Baby-Transportbereich (12) für die zumindest teilweise Aufnahme eines zu transportierenden Babys vorgesehen ist und wobei Mittel zur hängenden Befestigung des Baby-Transportbereichs (12) in dem Fahrradanhänger vorgesehen sind und der flächig ausgebildete Baby-Transportbereich (12) aus einer formstabilen Struktur gebildet ist, wobei die formstabile Struktur seitliche Wände aufweist, **dadurch gekennzeichnet, dass** die seitlichen Wände im Kopfbereich eine vergrößerte Höhe aufweisen, um ein zu transportierendes Baby mit den seitlichen Wänden vor Intrusionskräften zu schützen, die bei einem Seitenaufprall oder einem Überschlagen eines Fahrradanhängers durch den Aufprall von Gegenständen auftreten können, wobei an dem Baby-Transportbereich (12) selbst Mittel zur hängenden Befestigung angeordnet sind und wobei es sich bei den Mitteln zur hängenden Befestigung um Spannelemente (28) handelt.

2. Baby-Transportvorrichtung (10) nach dem vorstehenden Anspruch, **dadurch gekennzeichnet, dass** sich die formstabile Struktur über den vollständigen Baby-Transportbereich (12) erstreckt.

3. Baby-Transportvorrichtung (10) nach einem der vorstehenden Ansprüche, **dadurch gekennzeichnet, dass** die formstabile Struktur einstückig ausgebildet ist.

4. Baby-Transportvorrichtung (10) nach einem der vorstehenden Ansprüche, **dadurch gekennzeichnet, dass** die formstabile Struktur aus Kunststoff hergestellt ist.

5. Baby-Transportvorrichtung (10) nach einem der vorstehenden Ansprüche, **dadurch gekennzeichnet, dass** die formstabile Struktur mit dem Baby-Transportbereich durch einen Grundkörper (40) mit seitlichen Wänden (14a, 14b) als Schale ausgebildet ist.

6. Baby-Transportvorrichtung (10) nach einem der vorstehenden Ansprüche, **dadurch gekennzeichnet, dass** die formstabile Struktur einen umlaufenden, oberseitigen Kragen (22) aufweist.

7. Baby-Transportvorrichtung (10) nach einem der vorstehenden Ansprüche, **dadurch gekennzeichnet, dass** die Wände im Kopfbereich eine Höhe und Längserstreckung aufweisen, die mindestens 50 Prozent Überdeckung mit dem Kopf eines in einer Soll-Lage in der Baby-Transportvorrichtung (10) angeordneten Babys aufweisen.

8. Baby-Transportvorrichtung (10) nach einem der vorstehenden Ansprüche, **dadurch gekennzeichnet, dass** an dem Baby-Transportbereich (12) verstärkte Befestigungsbereiche (32) zur Anbindung von den Spannelementen (28) vorgesehen sind.

9. Baby-Transportvorrichtung (10) nach dem vorstehenden Anspruch, **dadurch gekennzeichnet, dass** in mindestens einem Befestigungsbereich (32) mindestens zwei Öffnungen (34) zur zweifachen und/oder umschlingenden Anordnung von den Spannelementen (28) vorgesehen sind.

10. Anordnung einer Baby-Transportvorrichtung (10) nach einem der Ansprüche 1 bis 9 an einem Fahrradanhänger, wobei die Baby-Transportvorrichtung (10) derart in dem Fahrradanhänger fixiert ist, dass der Baby-Transportbereich (12) hängend gelagert ist.

11. Anordnung nach dem vorstehenden Anspruch, **dadurch gekennzeichnet, dass** die hängende Lagerung dadurch erzielt ist, dass von einem vorderen Abschnitt der Baby-Transportvorrichtung (10) nach vorne und von einem hinteren Abschnitt der Baby-Transportvorrichtung (10) nach hinten jeweils mindestens eines der Spannelemente (28) eingesetzt ist.

12. Anordnung nach einem der beiden vorstehenden Ansprüche, **dadurch gekennzeichnet, dass** an den Spannelementen (28) vorgesehene Befestigungselemente (36) in sich in Querrichtung erstreckende Rahmenelemente (50) des Fahrradanhängers (48) eingehängt sind.

## Claims

1. A baby transport device (10) for the suspended transport of a baby in a bicycle trailer, wherein at least one flat baby transport area (12) for receiving a baby to be transported at least partially is provided and wherein means for suspended attachment of the baby transport area (12) in the bicycle trailer are provided and the flat baby transport area (12) is formed from a dimensionally stable structure, wherein the dimensionally stable structure has lateral walls, **characterised in that** the lateral walls have an increased height in the head area to protect, by the lateral walls, a baby to be transported from intrusion forces that can result from an impact of objects during a side impact or a rollover of a bicycle trailer, wherein means for suspended attachment are arranged at the baby transport area (12) itself and wherein the means for suspended attachment are tensioning elements (28).

2. The baby transport device (10) according to the preceding claim, **characterised in that** the dimensionally stable structure extends over the complete baby transport area (12).

3. The baby transport device (10) according to any one of the preceding claims, **characterised in that** the dimensionally stable structure is formed integrally.

4. The baby transport device (10) according to any one of the preceding claims, **characterised in that** the dimensionally stable structure is made of plastics.

5. The baby transport device (10) according to any one of the preceding claims, **characterised in that** the dimensionally stable structure with the baby transport area is formed by a main body (40) with lateral walls (14a, 14b) as a shell.

6. The baby transport device (10) according to any one of the preceding claims, **characterised in that** the dimensionally stable structure has a circumferential topside collar (22).

7. The baby transport device (10) according to any one of the preceding claims, **characterised in that** the walls in the head area have a height and a longitudinal extension having an overlap of at least 50 percent with the head of a baby arranged in the intended position in the baby transport device (10).

8. The baby transport device (10) according to any one of the preceding claims, **characterised in that** strengthened attachment areas (32) for attaching the tensioning elements (28) are provided at the baby transport area (12).

9. The baby transport device (10) according to the preceding claim, **characterised in that** at least two openings (34) for a twofold and/or entangling arrangement of the tensioning elements (28) are provided in at least one attachment area (32).

10. An arrangement of a baby transport device (10) according to any one of claims 1 to 9 at a bicycle trailer, wherein the baby transport device (10) is secured within the bicycle trailer such that the baby transport area (12) is supported in a suspended manner.

11. The arrangement according to the preceding claim, **characterised in that** the suspended support is achieved by installing at least one of the tensioning elements (28) from a forward portion of the baby transport device (10) to the front and from a rearward portion of the baby transport device (10) to the rear, respectively.

12. The arrangement according to any one of the two preceding claims, **characterised in that** fastening elements (36) provided at the tensioning elements (28) are hooked in transversely extending frame elements (50) of the bicycle trailer (48).

## Revendications

1. Dispositif de transport de bébé (10) pour le transport suspendu d'un bébé dans une remorque de vélo, dans lequel au moins une région de transport de bébé de forme plate (12) est prévue pour recevoir au moins partiellement un bébé à transporter, et dans lequel des moyens sont prévus pour la fixation suspendue de la région de transport de bébé (12) dans la remorque de vélo, et la région de transport de bébé de forme plate (12) est constituée d'une structure dimensionnellement stable, la structure dimensionnellement stable présentant des parois latérales, **caractérisé en ce que** les parois latérales dans la région de tête présentent une hauteur accrue pour protéger un bébé à transporter à l'aide des parois latérales contre des forces d'intrusion qui peuvent se produire en cas d'impact latéral ou de renversement d'une remorque de vélo par l'impact d'objets, des moyens de fixation suspendue étant eux-mêmes agencés au niveau de la région de transport de bébé (12), les moyens de fixation suspendue étant des éléments de serrage (28).

2. Dispositif de transport de bébé (10) selon la revendication précédente, **caractérisé en ce que** la structure dimensionnellement stable s'étend sur toute la région de transport de bébé (12).

3. Dispositif de transport de bébé (10) selon l'une quelconque des revendications précédentes, **caractérisé en ce que** la structure dimensionnellement stable est réalisée en une seule pièce.

4. Dispositif de transport de bébé (10) selon l'une quelconque des revendications précédentes, **caractérisé en ce que** la structure dimensionnellement stable est fabriquée en plastique.

5. Dispositif de transport de bébé (10) selon l'une quelconque des revendications précédentes, **caractérisé en ce que** la structure dimensionnellement stable avec la région de transport de bébé est constituée d'un corps de base (40) avec des parois latérales (14a, 14b) sous la forme d'une coque.

6. Dispositif de transport de bébé (10) selon l'une quelconque des revendications précédentes, **caractérisé en ce que** la structure dimensionnellement stable présente un col supérieur (22) périphérique.

7. Dispositif de transport de bébé (10) selon l'une quelconque des revendications précédentes, **caractérisé en ce que** les parois dans la région de tête présentent une hauteur et une extension longitudinale qui présentent au moins 50 pour cent de recouvrement avec la tête d'un bébé disposé dans une position de consigne dans le dispositif de transport de bébé (10).

8. Dispositif de transport de bébé (10) selon l'une quelconque des revendications précédentes, **caractérisé en ce que** des régions de fixation renforcées (32) sont prévues au niveau de la région de transport de bébé (12) pour le raccordement des éléments de serrage (28).

9. Dispositif de transport de bébé (10) selon la revendication précédente, **caractérisé en ce qu'**au moins deux ouvertures (34) sont prévues dans au moins une région de fixation (32) pour un agencement double et/ou enveloppé des éléments de serrage (28).

10. Agencement d'un dispositif de transport de bébé (10) selon l'une quelconque des revendications 1 à 9 dans une remorque de vélo, dans lequel le dispositif de transport de bébé (10) est fixé dans la remorque de vélo de manière à ce que la région de transport de bébé (12) soit montée suspendue.

11. Agencement selon la revendication précédente, **caractérisé en ce que** le montage suspendu est réalisé en installant au moins l'un des éléments de serrage (28) à partir d'une partie avant du dispositif de transport de bébé (10) vers l'avant et à partir d'une partie arrière du dispositif de transport de bébé (10) vers l'arrière.

12. Agencement selon l'une quelconque des deux revendications précédentes, **caractérisé en ce que** des éléments de fixation (36) prévus sur les éléments de serrage (28) sont accrochés dans des éléments de cadre (50) s'étendant transversalement de la remorque de vélo (48).
